# DEMANDE DE BREVET EUROPEEN

(11) **EP 1 777 927 A1**
(43) Date de publication de la demande: **25.04.2007**
(21) Numéro de dépôt: 06122357.4
(22) Date de dépôt: 16.10.2006
(51) Int. Cl.: H04M 3/30

(54) **Procédé de contrôle à distance de liaisons haut débit**

(30) Priorité: 18.10.2005 FR 0553158
(71) Demandeur: Acterna IPMS, 78370 Plaisir (FR)
(72) Inventeur: Schmitt, Jean, 28260, Rouvres (FR); Le Foll, Dominique, Ivibridge, Devon PL21 SXA (GB)
(74) Mandataire: Poulin, Gérard

(57) **Abrégé**

Procédé de répartition de ressources matérielles et logicielles de contrôle des liaisons entre une pluralité d'équipements d'abonnés et un opérateur de télécommunications dans un réseau de télécommunications comportant :
- un site central de contrôle (2),
- au moins un site intermédiaire de connexion (4), relié d'une part, au site central (2) par une première ligne de transmission (3), et d'autre part, aux équipements d'abonnés (12) par une deuxième ligne de transmission (13).

Ce procédé se caractérise par les étapes suivantes:
- définir les contrôles à effectuer sur la première ligne (3) et les contrôles à effectuer sur la deuxième ligne (13),
- répartir lesdites ressources matérielles et logicielles entre ledit site central (2) et ledit site intermédiaire de connexion (4) en fonction des contrôles susceptibles d'être effectués respectivement sur la première ligne de transmission (3) et sur la deuxième ligne de transmission (13).

## Description

L'invention se situe dans le domaine des télécommunications et concerne plus spécifiquement un procédé de répartition de ressources matérielles et logicielles de contrôle des liaisons entre une pluralité d'équipements d'abonnés et un opérateur de télécommunications dans un réseau de télécommunications.

L'invention s'applique dans un réseau comportant un site central de contrôle localisé chez l'opérateur et au moins un site intermédiaire de connexion, reliée d'une part, au site central par une première ligne de transmission, et d'autre part, aux équipements d'abonnés par une deuxième ligne de transmission.

L'invention concerne également une architecture de répartition de ressources matérielles et logicielles de contrôle des liaisons entre une pluralité d'équipements d'abonnés et un opérateur de télécommunication.

Cette architecture comporte un site central de contrôle comprenant une tête centrale de contrôle et au moins un site intermédiaire de connexion, reliée d'une part, au site central par une première ligne de transmission métallique ou à fibres optiques, et d'autre part, aux équipements d'abonnés via la paire de cuivre de la boucle locale.

### ÉTAT DE LA TECHNIQUE ANTÉRIEURE

Les techniques xDSL (pour digital subscriber line) sont de plus en plus utilisées pour assurer des transmissions de données haut débit, généralement de l'ordre de plusieurs mégabits par seconde, sur les câbles traditionnellement utilisés pour la téléphonie analogique. Il est donc impératif pour les opérateurs de télécommunications et les fournisseurs de services haut débit de disposer de techniques fiables pour assurer un contrôle efficace des lignes de transmission entre l'opérateur et l'abonné afin de respecter la qualité de service convenue.

Pour éviter les déplacements des techniciens en vue d'effectuer ces contrôles et réduire ainsi les coûts d'entretien et les désagréments causés aux abonnés, les opérateurs utilisent des têtes de mesure installées dans leur propre site. Ces têtes de mesure traitent les données fournies par des sondes réparties à différents points de la ligne testée.

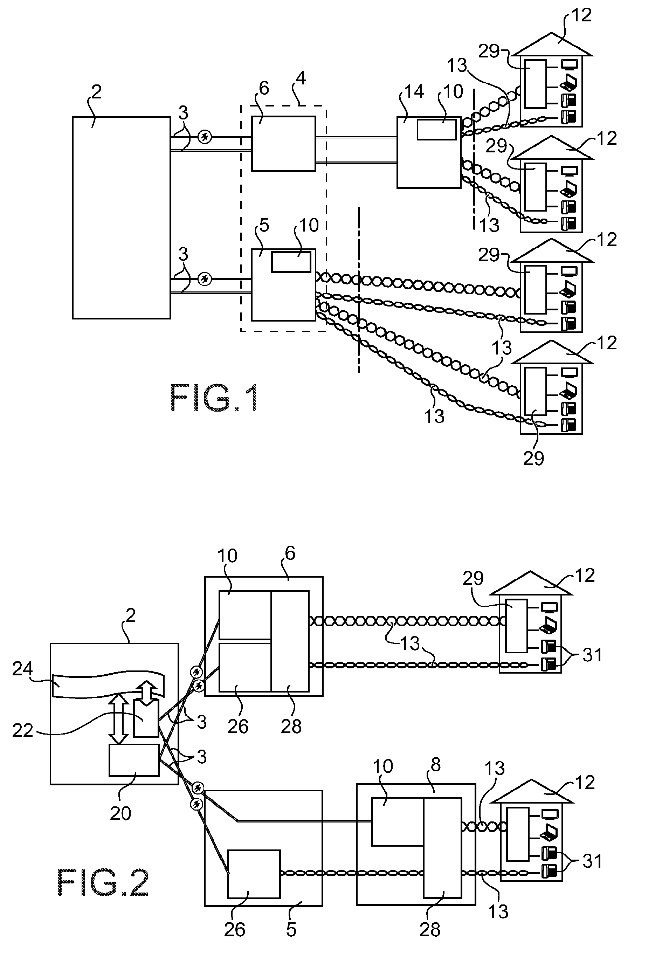

La figure 1 illustre schématiquement une architecture réseau dans laquelle sont mis en oeuvre les tests de ligne selon l'art antérieur.

Comme cela est illustré par cette figure 1, l'architecture réseau comporte un site central 2 relié par fibre optique 3 à un site intermédiaire de connexion 4 comportant un premier terminal distant 5 et un deuxième terminal distant 6.

Le premier terminal 5 comporte un multiplexeur DSLAM 10 connecté directement à des locaux d'abonnés 12 via la boucle locale 13.

Le deuxième terminal 6 est relié par une ligne téléphonique filaire et par une ligne hertzienne à une cabine externe 14 dans laquelle est agencé un multiplexeur DSLAM 10. La cabine externe 14 est connectée à des locaux d'abonnés 12 via la boucle locale 13.

La liaison par fibres optiques entre le site central 2 et les terminaux distants 5 et 6 ne permet pas d'effectuer une grande partie des mesures de bout-en-bout classiques, telles que par exemple des mesures de capacité et de résistance, réalisées habituellement sur une paire de cuivre lors des phases de pré-qualification de la ligne, d'exploitation ou encore en cas de dysfonctionnement.

La figure 2 illustre schématiquement la structure interne du site central 2, des terminaux distants 5 et 6, et de la cabine externe 14.

Le site central 2 comporte un commutateur IP 20 (pour Internet Protocol), un commutateur téléphonique classique 22 et un gestionnaire de test 24 qui assure la fonction de pilotage des mesures et de présentation des résultats aux utilisateurs.

Le premier terminal distant 5 comporte une artère numérique DLC 26 (pour Digital loop carrier) et le deuxième terminal distant 6 comporte un multiplexeur DSLAM 10, une artère numérique DLC 26, et une matrice d'accès 28. Chaque local d'abonnés 12 comporte au moins un modem ATU-R 29 (pour ADSL Unit Transmission-Remote Side) et au moins un terminal téléphonique 31.

Les procédés utilisés dans l'art antérieur pour réaliser le contrôle des liaisons entre l'opérateur et les abonnés dans l'architecture de la figure 1, sont basés sur les techniques SELT (pour Single End Loop Test) et DELT (pour Double End Loop Test).

La technique SELT peut être mise en oeuvre à partir des multiplexeurs DSLAM ou d'un multiplexeur multimédia MSANs (pour Multi service Access Node) installés soit dans le site central 2 de l'opérateur soit dans les cabines externes 14 agencées à proximité des locaux d'abonnés. Cette technique ne nécessite pas l'installation d'équipements extérieurs de test dans le site central 2 ou à une extrémité distante de la boucle locale, et sa mise en oeuvre ne nécessite pas la présence d'un équipement d'abonnés. Seul un multiplexeur DSLAM ou MSAM est nécessaire et doit supporter des services ADSL2. Par contre, pour que le test soit possible, le DSLAM ou le MSAM doit être alimenté et en service. Il en résulte qu'il n'est pas possible de réaliser des mesures lorsque le DSLAM ou le MSAM est défectueux ou hors service. En plus, dans la plupart des cas, le DSLAM ne distingue pas une ligne non synchronisée d'un port défectueux, particulièrement lorsque le dysfonctionnement a pour source une panne dans le composant analogique frontal. Par conséquent, cette technique n'est pas adaptée pour tester une ligne lorsque le DSLAM, à partir duquel elle est sensée être mise en oeuvre, est défectueux et pourrait être à l'origine du dysfonctionnement de la ligne.

En outre, pour obtenir des résultats de test précis, des mesures de calibrage régulières sont nécessaires afin de compenser les variations de température, particulièrement pour les mesures effectuées à partir d'un multiplexeur DSLAM externe ou d'une cabine externe 14. Ces mesures de calibrage doivent être effectuées entre la ligne et le modem ADSL2. D'autre part, du fait que la technique SELT soit basée sur des signaux à large bande, il est nécessaire de court-circuiter les séparateurs voix-données du site central 2 ou de la cabine externe 14 dès qu'un filtre (par exemple une capacité de blocage) est en série sur la ligne. Ceci contribue à l'augmentation du coût des séparateurs.

Un autre inconvénient de la technique SELT provient du fait que l'impédance de l'équipement distant connecté à l'extrémité de la ligne peut avoir un impact important sur la précision des mesures. Celles-ci dépendent du type de terminal connecté et des conditions de la ligne (téléphone raccroché ou décroché). En effet, un téléphone raccroché est pour le dispositif de mesure équivalent à une haute impédance (>100 KΩ), tandis qu'un téléphone décroché correspond à une impédance d'environ 900 Ω. Sans précaution particulière, les mesures par réflectométrie TDR (Time Domain Reflectometry), FDR (Frequency Domain Reflectometry) ou S11 sont dégradées dès que l'impédance de ligne est proche de l'impédance de la sortie de mesure. Ceci est le cas lorsqu'un modem ADSL distant est connecté. En plus, les porteuses transmises par les modems ATU-R (pour ADSL Unit Transmission-Remote Side) perturbent de façon significative ce type de mesure.

La technique DELT permet d'effectuer des mesures à deux extrémités de la ligne à tester et peut être mise en oeuvre à partir d'un multiplexeur DSLAM ou d'un MSAN's. Cependant, sa mise en oeuvre nécessite que les équipements d'abonnés soient présents à l'autre extrémité de la ligne et soient synchronisés avec le DSLAM ou le MSAN.

Le but de l'invention est de pallier les insuffisances de l'art antérieur décrit ci-dessus.

Un autre but de l'invention est de réduire les coûts de maintenance des lignes aussi bien dans la phase de pré-qualification, d'exploitation et d'intervention en cas de dysfonctionnement.

Un autre but est d'adapter les tests aux nouvelles architectures de réseaux tout en en réduisant le coût.

### EXPOSÉ DE L'INVENTION

Ces buts sont atteints au moyen d'un procédé de répartition de ressources matérielles et logicielles de contrôle des liaisons entre une pluralité d'équipements d'abonnés et un opérateur de télécommunications dans un réseau de télécommunications comportant :
- un site central de contrôle,
- au moins un site intermédiaire de connexion, relié d'une part, au site central par une première ligne de transmission, et d'autre part, aux équipements d'abonnés par une deuxième ligne de transmission.

Le procédé selon l'invention comporte les étapes suivantes :
- définir les contrôles à effectuer sur la première ligne et les contrôles à effectuer sur la deuxième ligne,
- répartir lesdites ressources matérielles et logicielles entre ledit site central et ledit site intermédiaire de connexion en fonction des contrôles susceptibles d'être effectués respectivement sur la première ligne de transmission et sur la deuxième ligne de transmission.

Ce procédé s'applique préférentiellement lorsque lesdites première et deuxième lignes de transmission et comportent des fibres optiques et/ou des câbles métalliques.

Dans un premier mode de réalisation, le procédé comporte les étapes suivantes :
- relier le site central et le site intermédiaire par une première paire de cuivre calibrée,
- déterminer l'atténuation totale de bout-en-bout entre le site central et les équipements d'abonnés,
- déduire à partir de ladite atténuation totale l'atténuation sur ladite deuxième ligne de transmission,
- déterminer à partir de l'atténuation sur ladite deuxième ligne le débit maximum susceptible de transiter via cette deuxième ligne de transmission.

Dans un deuxième mode de réalisation, le procédé comporte les étapes suivantes :
- réaliser un premier groupe de mesures au moyen d'au moins une tête de contrôle distante agencée dans le site intermédiaire,
- transmettre les résultats desdites mesures à une tête de contrôle centrale agencée dans le site centrale,
- réaliser des mesures sur les connexions métalliques sur la deuxième ligne de transmission au moyen d'une matrice d'accès agencée dans ledit site intermédiaire.

Le procédé selon l'invention est mis en oeuvre dans une architecture réseau comportant :
- un site central de contrôle dans lequel est agencée une tête de contrôle centrale,
- au moins un site intermédiaire de connexion reliée d'une part, au site central par une première ligne de transmission, et d'autre part, aux équipements d'abonnés par une deuxième ligne de transmission.
   Dans cette architecture, les ressources matérielles et logicielles de test sont réparties entre ledit site central et ledit site intermédiaire en fonction du type de contrôle susceptible d'être effectué respectivement sur la première ligne de transmission et sur la deuxième ligne de transmission.

### BRÈVE DESCRIPTION DES DESSINS

- La figure 1, décrite précédemment, illustre schématiquement une architecture réseau de l'art antérieur ;
- la figure 2 illustre schématiquement une représentation détaillée de la figure 1 ;
- la figure 3 illustre schématiquement une répartition des ressources de test selon un premier mode de réalisation de l'invention ;
- la figure 4 illustre schématiquement une répartition des ressources de test selon un deuxième mode de réalisation de l'invention ;
- la figure 5 illustre schématiquement le flux de données dans l'architecture réseau décrite à la figure 4 ;
- la figure 6 illustre schématiquement une première variante de répartition des ressources de test de ligne dans l'architecture de la figure 4 ;
- la figure 7 illustre schématiquement une deuxième variante de répartition des ressources de test de ligne dans l'architecture de la figure 4.

### EXPOSÉ DÉTAILLÉ DE MODES DE RÉALISATION PARTICULIERS

Dans la description qui suit, des références identiques désigneront les éléments remplissant des fonctions identiques qui sont communs aux figures illustrant l'art antérieur et aux figures illustrant l'invention.

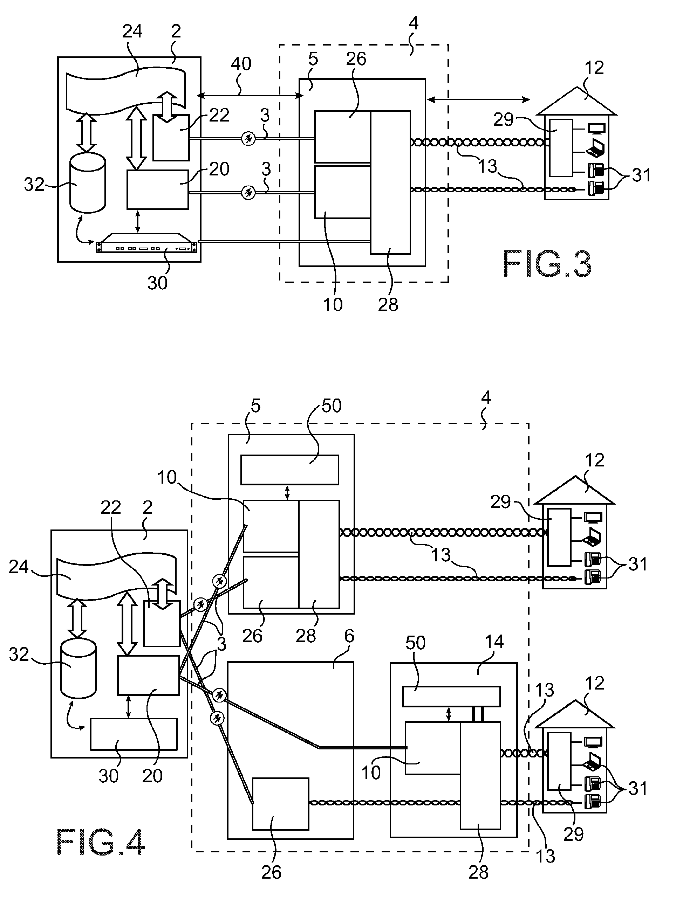

La figure 3 illustre une architecture réseau comportant un site central 2, un site intermédiaire de connexion 4 et un local d'abonnés 12. Le site central 2 est relié par fibres optiques 3 au site intermédiaire de connexion 4. Ce dernier est relié au local d'abonnés 12 via la boucle locale 13 sur laquelle transitent le service téléphonique classique et des service xDSL haut débit.

Le site central 2 comporte un commutateur IP 20, un commutateur téléphonique 22, un gestionnaire de test 24, une tête de contrôle centrale 30, et une base de données de tests 32.

Le site intermédiaire de connexion 4 comporte un terminal distant 5 comprenant un multiplexeur DSLAM 10, une artère numérique DLC 26 et une matrice d'accès 28.

Le local d'abonnés 14 comporte un modem ATU-R 29 (pour ADSL Unit Transmission-Remote Side) et un ou plusieurs terminaux téléphoniques 31.

Le site central 2 est en outre relié au terminal distant 5 par une liaison métallique telle que par exemple une paire de cuivre calibrée 40 destinée à prolonger la connexion métallique 13 entre le site central 2 et le local d'abonné 12 pour permettre à la tête de contrôle centrale 30 de mesurer l'atténuation totale de bout-en-bout et de déduire, à partir de ladite atténuation totale, l'atténuation sur la paire de cuivre de la boucle locale 13. Ceci permet à la tête de contrôle 30 de déterminer le débit maximum susceptible de transiter via la paire de cuivre 13.

L'atténuation sur cette deuxième ligne de transmission 13 est calculée en retranchant l'atténuation sur la paire de cuivre calibrée 40 de l'atténuation totale mesurée. Le débit maximum susceptible de transiter via la deuxième ligne de transmission est ensuite calculé à partir de l'atténuation sur ladite deuxième ligne de transmission.

La figure 4 illustre un deuxième mode de répartition de ressources de test dans une architecture réseau dans laquelle le site intermédiaire de connexion 4 comporte en outre un deuxième terminal distant 6 comprenant une artère numérique DLC 26 reliée à une cabine externe 14. Cette dernière comporte un DSLAM 10 distant, une tête de contrôle distante 50 destinée à réaliser un deuxième groupe de fonctions de contrôle de lignes, et une matrice d'accès 28 pour réaliser des contrôles de connexion métallique sur la boucle locale 13.

Dans l'architecture décrite à la figure 4, la tête de contrôle centrale 30 comporte des ressources pour effectuer les fonctions suivantes :
- communication avec un gestionnaire de test 24 qui assure la fonction de pilotage des mesures et de présentation des résultats aux utilisateurs,
- gestion de l'interface avec la tête de contrôle distante 50,
- traitement des résultats bruts des mesures réalisées par les têtes de contrôle distantes (50),
- traitement des mesures réflectométriques effectuées par la tête de contrôle distantes 50 pour obtenir l'atténuation, la longueur et éventuellement la topologie de la ligne 13,
- détection de modems ATU-R 29,
- prédiction de débit à partir d'atténuations mesurées sur les câbles de la deuxième liaison 13 et à partir du bruit large bande mesuré au niveau de la tête de contrôle distante 50,
- vérification du fonctionnement des modems distants (ATU-R) 29 par synchronisation xDSL et activation des couches supérieures telles que les couches ATM, PPP, IPVidéo,
- détection de dérivation de lignes à partir des traitements par réflectométrie fréquentielle (FDR) et à partir de mesures de capacité distantes,
- vérifications en bande étroite des éventuels défauts résistifs et/ou capacitifs en courant alternatif et continu,
- détection de charges inductives,
- présentation et traitement à distance des résultats de mesures.

La tête de contrôle distante 50 agencée dans le premier terminal distant 5 comporte des ressources pour effectuer les fonctions suivantes :
- communication avec la tête de contrôle centrale 30,
- émulation de modems ATU-R 29 pour contrôler les ports du multiplexeur DSLAM 10 et la disponibilité des services multimédia (voix, données, vidéo),
- contrôle et mesure de bruits large bande et bande étroite,
- détection de modems ATU-R 29,
- mesure de capacité et de résistance,
- contrôle des tensions AC et DC,
- vérification du service téléphonique fournie via la ligne 13,
- vérification d'identifiants de lignes,
- détection de charges inductives ou de lignes dérivées.

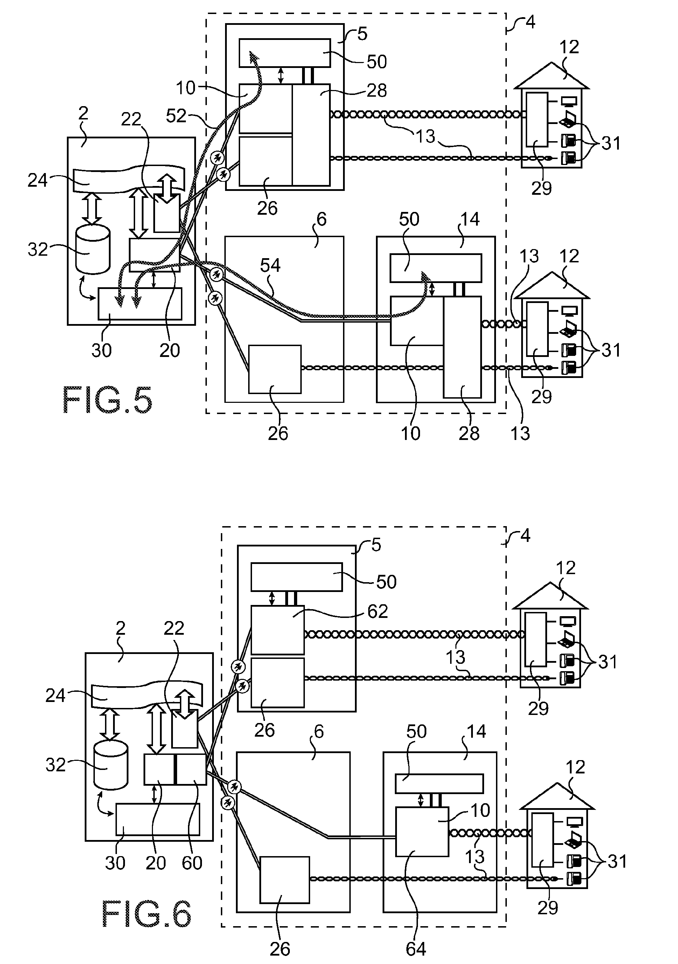

Toutes les données de mesure effectuées par les têtes de contrôle distantes 50 sont transmises dans des paquets IP à la tête de contrôle centrale 30 comme cela est illustré schématiquement à la figure 5 par les flèches 52 et 54.

La figure 6 illustre un troisième mode de répartition de ressources de test dans une architecture réseau dans laquelle le site central 2 comporte un premier module de multiplexage et de traitement DSLAM (DSP) (pour digital signal processing) 60 destiné au traitement d'un premier groupe de fonctions DSLAM (DSP). Dans cette architecture, le site intermédiaire de connexion 4 comporte un premier terminal distant 5 relié directement à un premier groupe d'équipements d'abonnés 12 via la boucle locale 13 et comprenant un deuxième module de multiplexage et de traitement DSLAM AFE (pour Analog Front End) 62 destiné au traitement d'un deuxième groupe de fonctions, une artère numérique DLC 26, et une tête de contrôle distante 50 destinée à réaliser une partie des contrôles de ligne.

Dans cette architecture, le site intermédiaire de connexion 4 comporte en outre un deuxième terminal distant 6 reliée à un deuxième groupe d'équipements d'abonnés 12 via une cabine externe 14 comprenant une artère numérique 26, une tête de contrôle distante 50 destinée à réaliser une partie des contrôles de ligne, et un troisième module de multiplexage DSLAM AFE 64 destiné au traitement d'un troisième groupe de fonctions.

Dans cette architecture, la tête de contrôle centrale 30 agencée dans le site central 2 assure les fonctions suivantes :
- communication avec un gestionnaire de test 24 qui assure la fonction de pilotage des mesures et présentation des résultats aux utilisateurs,
- gestion de l'interface avec la tête de contrôle distante 50,
- traitement des résultats bruts des mesures réalisées par les têtes de contrôle distantes 50,
- traitement des mesures réflectométriques effectuées par les têtes de contrôle distantes 50 pour obtenir l'atténuation, la longueur et éventuellement la topologie des lignes 13,
- détection de modems ATU-R 29,
- prédiction de débit à partir d'atténuations mesurées sur les câbles de la deuxième liaison 13 et à partir du bruit large bande mesuré au niveau des têtes de contrôle distantes 50,
- vérification du bon fonctionnement du modem distant (ATU-R) 29 par synchronisation xDSL et activation des couches supérieures telles que les couches ATM, PPP, IPVidéo,
- détection de dérivation de ligne à partir des traitements par réflectométrie fréquentielle (FDR) et des mesures de capacité distantes,
- vérification en bande étroite des éventuels défauts résistifs et/ou capacitifs et mesure des tensions ou courants alternatifs et continus,
- détection de charges inductives,
- présentation et traitement à distance des résultats de mesures.

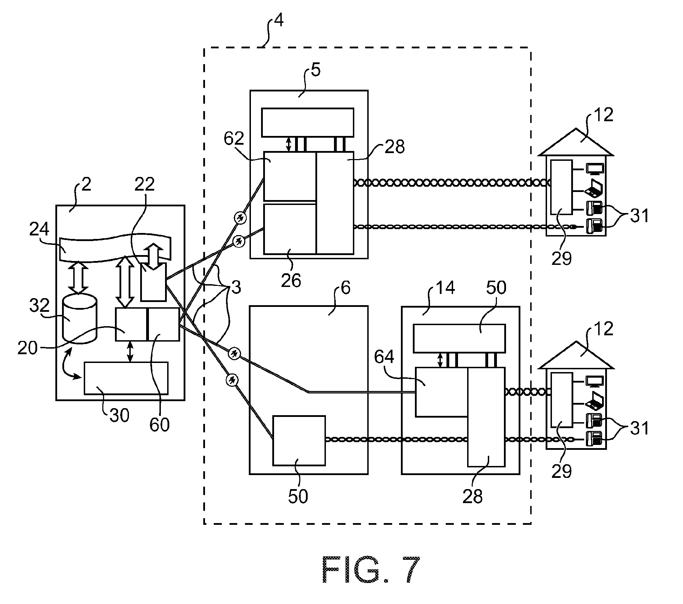

La figure 7 illustre un quatrième mode de réalisation de l'architecture réseau dans laquelle le premier terminal distant 5 et la cabine externe 14 comportent en outre une matrice d'accès 28 pour permettre à la tête de contrôle centrale 30 d'effectuer les fonctions suivantes :
- mesure de capacité et de résistance,
- contrôle des tensions AC et DC,
- vérification des lignes téléphoniques,
- vérification d'identifiants de ligne,
- détection de charges inductives.

## Revendications

1. Procédé de répartition de ressources matérielles et logicielles de contrôle des liaisons entre une pluralité d'équipements d'abonnés et un opérateur de télécommunications dans un réseau de télécommunications comportant :
- un site central de contrôle (2),
- au moins un site intermédiaire de connexion (4), relié d'une part, au site central (2) par une première ligne de transmission (3), et d'autre part, aux équipements d'abonnés (12) par une deuxième ligne de transmission (13), procédé **caractérisé par** les étapes suivantes :
- définir les contrôles à effectuer sur la première ligne (3) et les contrôles à effectuer sur la deuxième ligne (13),
- répartir lesdites ressources matérielles et logicielles entre ledit site central (2) et ledit site intermédiaire de connexion (4) en fonction des contrôles susceptibles d'être effectués respectivement sur la première ligne de transmission (3) et sur la deuxième ligne de transmission (13).

2. Procédé selon la revendication 1, dans laquelle lesdites première et deuxième lignes de transmission (3) et (13) comportent des fibres optiques et/ou des câbles métalliques.

3. Procédé selon la revendication 2,
**caractérisé en ce qu'**il comporte les étapes suivantes :
- relier le site central (2) et le site intermédiaire (4) par une première paire de cuivre (3) calibrée,
- déterminer l'atténuation totale de bout-en-bout entre le site central (2) et les équipements d'abonnés (12),
- déduire à partir de ladite atténuation totale l'atténuation sur ladite deuxième ligne de transmission (13),
- déterminer à partir de l'atténuation sur ladite deuxième ligne (13) le débit maximum susceptible de transiter via cette deuxième ligne de transmission (13).

4. Procédé selon la revendication 2, consistant à :
- réaliser un premier groupe de mesures au moyen d'au moins une tête de contrôle distante (50) agencée dans le site intermédiaire (4),
- transmettre les résultats desdites mesures à une tête de contrôle centrale (30) agencée dans le site centrale (2),
- réaliser des mesures sur les connexions métalliques sur la deuxième ligne de transmission (13) au moyen d'une matrice d'accès (28) agencée dans ledit site intermédiaire (4).

5. Procédé selon la revendication 4 dans lequel ladite tête de contrôle centrale (30) réalise les fonctions suivantes :
- communication avec un gestionnaire de test (24) qui assure la fonction de pilotage des mesures et de présentation des résultats aux utilisateurs,
- gestion de l'interface avec la tête de contrôle distante (50),
- traitement des résultats bruts des mesures réalisées par les têtes de contrôle distantes (50),
- traitement des mesures réflectométriques effectuées par les têtes de contrôle distantes (50) pour obtenir l'atténuation, la longueur et éventuellement la topologie de la ligne (13),
- détection de modems ATU-R (29),
- prédiction de débit à partir d'atténuations mesurées sur les câbles de la deuxième liaison (13) et à partir du bruit large bande mesuré au niveau de la tête de contrôle distante (50),
- vérification du fonctionnement des modems distants (ATU-R) (29) par synchronisation xDSL et activation des couches supérieures telles que les couches ATM, PPP, IPVidéo,
- détection de dérivation de lignes à partir des traitements par réflectométrie fréquentielle (FDR) et à partir de mesures de capacité distantes,
- vérifications en bande étroite des éventuels défauts résistifs et/ou capacitifs en courant alternatif et continu,
- détection de charges inductives,
- présentation et traitement à distance des résultats de mesures.

6. Procès selon la revendication 4, dans lequel la tête de contrôle distante (50) agencée dans le site intermédiaire (4) réalise les fonctions suivantes :
- communication avec la tête de contrôle centrale (30),
- émulation de modems ATU-R (29) pour contrôler les ports du multiplexeur DSLAM (10) et la disponibilité des services multimédia (voix, données, vidéo),
- contrôle et mesure de bruits large bande et bande étroite,
- détection de modems ATU-R (29)
- mesure de capacité et de résistance,
- contrôle des tensions AC et DC,
- vérification du service téléphonique fournie via la ligne (13),
- vérification d'identifiants de ligne,
- détection de charges inductives ou de lignes dérivées.

7. Architecture de répartition de ressources matérielles et logicielles de contrôle des liaisons entre une pluralité d'équipements d'abonnés (12) et un opérateur de télécommunications comportant :
- un site central (2) de contrôle dans lequel est agencée une tête de contrôle centrale (30),
- au moins un site intermédiaire de connexion (4), relié d'une part, au site central (2) par une première ligne de transmission (3), et d'autre part, aux équipements d'abonnés (12) par une deuxième ligne de transmission (13),
architecture **caractérisée en ce que** lesdites ressources matérielles et logicielles sont réparties entre ledit site central (2) et ledit site intermédiaire (4) en fonction du type de contrôle susceptible d'être effectué respectivement sur la première ligne de transmission (3) et sur la deuxième ligne de transmission (13).

8. Architecture selon la revendication 7, dans laquelle lesdites première et deuxième lignes de transmission (3) et (13) comportent des fibres optiques et/ou des câbles métalliques.

9. Architecture selon la revendication 8, **caractérisée en ce que** ledit site intermédiaire de connexion (4) comporte un terminal distant (5) comprenant un multiplexeur DSLAM (10), une artère numérique (26) et une matrice d'accès (28), et **en ce que** ladite première ligne (3) comporte en outre une première paire de cuivre (3) calibrée destinée à permettre à la tête de contrôle centrale (30) de mesurer l'atténuation totale de bout-en-bout entre l'opérateur et les équipements d'abonnés (12) et à déduire à partir de ladite atténuation totale l'atténuation sur ladite deuxième ligne de transmission (13) de manière à déterminer le débit maximum susceptible de transiter via cette deuxième ligne de transmission (13).

10. Architecture selon la revendication 9, dans laquelle l'atténuation sur ladite deuxième ligne de transmission (13) est calculée en retranchant l'atténuation sur la paire de cuivre calibrée (3) de l'atténuation totale mesurée, et le débit maximum susceptible de transiter via cette deuxième ligne de transmission (13) est calculé à partir de l'atténuation sur ladite deuxième ligne de transmission (13).

11. Architecture selon la revendication 8, dans laquelle le site intermédiaire de connexion (4) comporte un premier terminal distant (5) comprenant un DSLAM (10), une artère numérique (26), une tête de contrôle distante (50), et une matrice d'accès (28), ledit premier terminal distant (5) étant relié directement à un premier groupe d'équipements d'abonnés (12), ladite tête de contrôle distante (50) étant destinée à réaliser un premier groupe de fonctions de contrôle, et ladite matrice d'accès (28) étant destinée à réaliser des contrôles de connexion métallique sur la deuxième ligne de transmission (13).

12. Architecture selon la revendication 11, dans laquelle le site intermédiaire de connexion (4) comporte en outre, au moins un deuxième terminal distant (6) comprenant une artère numérique (26) reliée à un deuxième groupe réduit d'équipements d'abonnés (12) via une cabine externe (14) comprenant un DSLAM (10) distant, une tête de contrôle distante (50) destinée à réaliser un deuxième groupe de fonctions de contrôle de ligne, et une matrice d'accès (28) pour réaliser des contrôles de connexion métallique sur la deuxième ligne de transmission (13).

13. Architecture selon la revendication 12, dans laquelle le site central (2) comporte des ressources pour effectuer les fonctions suivantes :
- communication avec un gestionnaire de test (24) qui assure la fonction de pilotage des mesures et présentation des résultats aux utilisateurs,
- gestion de l'interface avec la tête de contrôle distante (50),
- traitement des résultats bruts des mesures réalisées par les têtes de contrôle distantes (50),
- traitement des mesures réflectométriques effectuées par les têtes de contrôle distantes (50) pour obtenir l'atténuation, la longueur et éventuellement la topologie des lignes (13),
- détection de modems ATU-R (29),
- prédiction de débit à partir d'atténuations mesurées sur les câbles de la deuxième liaison (13) et à partir du bruit large bande mesuré au niveau des têtes de contrôle distantes (50),
- vérification du bon fonctionnement du modem distant (ATU-R) (29) par synchronisation xDSL et activation des couches supérieures telles que les couches ATM, PPP, IPVidéo,
- détection de dérivation de ligne à partir des traitements par réflectométrie fréquentielle (FDR) et des mesures de capacité distantes,
- vérification en bande étroite des éventuels défauts résistifs et/ou capacitifs et mesure des tensions ou courants alternatifs et continus,
- détection de charges inductives (Load Coil detection),
- présentation et traitement à distance des résultats de mesures.

14. Architecture selon la revendication 12, dans laquelle le premier terminal distant (5) comporte des ressources pour effectuer les fonctions suivantes :
- communication avec la tête de contrôle centrale (30),
- émulation de modems ATU-R (29) pour contrôler les ports du multiplexeur DSLAM (10) et la disponibilité des services multimédia (voix, données, vidéo),
- contrôle et mesure de bruits large bande et bande étroite,
- détection de modems ATU-R (29),
- mesure de capacité et de résistance, (Capacitance and resistance),
- contrôle des tensions AC et DC,
- vérification du service téléphonique (13),
- vérification d'identifiants de ligne, (Line ID verification),
- détection de charges inductives ou de lignes dérivées.

15. Architecture selon la revendication 12, dans laquelle la tête de contrôle distante (50), agencée dans la cabine externe (4), comporte des ressources pour effectuer les fonctions suivantes :
- communication avec la tête de contrôle centrale (30),
- émulation de modems ATU-R (29) pour contrôler les ports du multiplexeur DSLAM (10) et la disponibilité des services multimédia (voix, données, vidéo),
- contrôle et mesure de bruits large bande et bande étroite,
- détection de modems ATU-R (29),
- mesure de capacité et de résistance, (Capacitance and résistance),
- contrôle des tensions AC et DC,
- vérification du service téléphonique (13),
- détection de charges inductives.

16. Architecture selon la revendication 7, dans laquelle le site centrale (2) comporte un premier module de multiplexage DSLAM (DSP) (pour digital signal processing) (60) destiné au traitement d'un premier groupe de fonctions, et le site intermédiaire de connexion (4) comporte un premier terminal distant (5) comprenant un deuxième module de multiplexage DSLAM AFE (pour Analog Front End) (62) destiné au traitement d'un deuxième groupe de fonctions, une artère numérique (26), une tête de contrôle distante (50) destinée à réaliser une partie des contrôles de ligne, ledit premier terminal (5) étant relié directement à un premier groupe d'équipements d'abonnés (12).

17. Architecture selon la revendication 12, dans laquelle le site intermédiaire de connexion (4) comporte en outre, au moins un deuxième terminal distant (6) relié à un deuxième groupe réduit d'équipements d'abonnés (12) via une cabine externe (14) comprenant une artère numérique (26), une tête de contrôle distante (50) destinée à réaliser une partie des contrôles de ligne, et un troisième module de multiplexage DSLAM AFE (64) destiné au traitement d'un troisième groupe de fonctions.

18. Architecture selon la revendication 17, dans laquelle le site central (2) comporte des ressources pour effectuer les fonctions suivantes :
- communication avec le gestionnaire de test (24) qui assure la fonction de pilotage des mesures et présentation des résultats aux utilisateurs,
- gestion de l'interface avec la tête de contrôle distante (50),
- traitement des résultats bruts des mesures réalisées par les têtes de contrôle distantes (50),
- traitement des mesures réflectométriques effectuées par les têtes de contrôle distantes (50) pour obtenir l'atténuation, la longueur et éventuellement la topologie des lignes (13),
- détection de modems ATU-R (29),
- prédiction de débit à partir d'atténuations mesurées sur les câbles de la deuxième liaison (13) et à partir du bruit large bande mesuré au niveau des têtes de contrôle distantes (50),
- vérification du bon fonctionnement du modem distant (ATU-R) (29) par synchronisation xDSL et activation des couches supérieures telles que les couches ATM, PPP, IPVidéo,
- détection de dérivation de ligne à partir des traitements par réflectométrie fréquentielle (FDR) et des mesures de capacité distantes,
- vérification en bande étroite des éventuels défauts résistifs et/ou capacitifs et mesure des tensions ou courants alternatifs et continus,
- détection de charges inductives,
- présentation et traitement à distance des résultats de mesures.

19. Architecture selon la revendication 17, dans laquelle ledit premier terminal distant (5) et ladite cabine externe (14) comportent en outre une matrice d'accès (28) pour permettre à la tête de contrôle centrale (30) d'effectuer les fonctions suivantes :
- mesures de capacité et de résistance,
- contrôle des tensions AC et DC,
- vérification du service téléphonique (13),
- vérification d'identifiants de ligne,
- détection de charges inductives.
